# EUROPÄISCHE PATENTSCHRIFT

(11) **EP 4 259 873 B1**
(45) Veröffentlichungstag und Bekanntmachung des Hinweises auf die Patenterteilung: **18.03.2026**
(21) Anmeldenummer: 21844181.4
(22) Anmeldetag: 06.12.2021
(51) Int. Cl.: D06F 39/10, A47L 15/42, B01D 29/01

(54) **FILTERVORRICHTUNG FÜR EINE SPÜL- ODER WASCHMASCHINE**
FILTER DEVICE FOR A DISHWASHER OR A WASHING MASHINE
DISPOSITIF DE FILTRAGE POUR UN LAVE-VAISSELLE OU UNE MACHINE À LAVER

(30) Priorität: 14.12.2020 DE 202020107231 U
(43) Veröffentlichungstag der Anmeldung: 18.10.2023
(73) Patentinhaber: Hans-Joachim Schneider GmbH, 15827 Blankenfelde-Mahlow (DE)
(72) Erfinder: SCHNEIDER, Olaf, 15827 Blankenfelde-Mahlow (DE)
(74) Vertreter: Kayser, Christoph
(86) Internationale Anmeldenummer: PCT/DE2021/000190
(87) Internationale Veröffentlichungsnummer: WO 2022/127957

(56) Entgegenhaltungen:
- EP-A1- 1 751 343
- GB-A- 2 581 790
- JP-A- 2010 057 651
- US-A- 3 240 345

## Beschreibung

Die vorliegende Erfindung betrifft eine Filtervorrichtung zum Anschluss an eine Wasserablassseite von industriellen Waschmaschinen, Spülmaschinen oder anderen Geräten mit Wasserabfluss in die öffentliche Kanalisation, mit einem Filtergehäuse, mit einer Einlauföffnung für Brauchwasser, mit einer Auslauföffnung für Reinwasser, wobei die Einlauföffnung in einer ersten Gehäusewand ausgebildet ist, und mit einer Filtereinrichtung zum Filtern des Brauchwassers, die stromabwärts der Einlauföffnung im Strömungsweg des Brauchwassers angeordnet ist, wobei die Filtereinrichtung ein Siebelement umfasst, das sich quer über den Strömungsweg des Brauchwassers erstreckt und wobei die Auslauföffnung in der ersten Gehäusewand ausgebildet ist und ein Strömungsweg zwischen dem Siebelement und der Auslauföffnung wenigstens in einem letzten Abschnitt vor der Auslauföffnung durch einen Strömungskanal führt.

Eine solche Filtervorrichtung, die außerhalb einer Industriemaschine mit Wasserablass angeordnet werden kann, ist aus dem Stand der Technik allgemein bekannt. Bekannt ist auch eine innerhalb einer Haushaltswaschmaschine angeordnete Filtereinrichtung als Flusenfilterkasten oder Filterbox. Industriemaschinen mit Wasserablass haben in der Regel keine Flusensiebe oder Flusenfilter.

Eine in einer Haushaltswaschmaschine integrierte Filtereinrichtung ist aus JP2010057651 A als Flusenfilterkasten oder Filterbox bekannt. Eine solche Filtereinrichtung muss lediglich Flusen auffangen. Andere Feststoffe, wie Schlämme, Sand oder dergleichen, werden mit dieser nicht gefiltert. Dafür besteht auch kein Bedarf.

Ein in eine Haushaltswaschmaschine integrierte Filtereinrichtung ist auch aus WO2005/118939 A1 bekannt. Sie weist ein trichterförmiges Flusensieb auf, in dem sich Flusen festsetzen können. Auch eine solche Filtereinrichtung ist nicht dafür geeignet, auch andere Feststoffe, wie Schlämme, Sand oder dergleichen, zu filtern und entsprechend gereinigt werden zu können.

Eine zur Filterung von Flusen vorgesehene Filtereinrichtung, als Filterkasten, Filtergehäuse oder auch Filterbox ist ein Bauteil, das in einer mittels Wasser reinigenden Vorrichtung, z.B. einer Waschmaschine, eingesetzt ist, um das Brauchwasser nach einem Waschvorgang von groben Rückständen, zum Beispiel Fremdkörpern aller Art, wie Flusen, Sand, Knöpfe, Münzen etc., zu befreien.

Filtervorrichtungen für industrielle Waschmaschinen, Spülmaschinen oder dergleichen werden hingegen an die Wasserablassseite der industriellen Waschmaschinen, Spülmaschinen oder anderen Geräten mit Wasserabfluss in die öffentliche Kanalisation angeschlossen, also außerhalb der derselben, um das Abwasser vor der Einleitung in das Abwassersystem grob zu reinigen.

Die für diesen industriellen Einsatz üblichen, externen Filtervorrichtungen des Standes der Technik weisen eine Einlauföffnung auf, durch die Brauchwasser aus dem Spül- oder Waschvorgang in ein Filtergehäuse eingeleitet wird, und eine Auslauföffnung, durch welche in dem Filtergehäuse gefiltertes Brauchwasser als Reinwasser aus der Filtervorrichtung ausgeleitet wird. Zwischen der Einlauföffnung und der Auslauföffnung ist im Strömungsweg des Wassers eine Filtereinrichtung angeordnet, durch die das Brauchwasser aus Richtung Einlauföffnung hindurchströmt, um von den vorgenannten groben Rückständen befreit zu werden. Die Auslauföffnung befindet sich an einer gegenüberliegenden Seite des Filtergehäuses, so dass der Strömungsweg durch das Filtergehäuse im Wesentlichen von einer Seite zur anderen Seite des Filtergehäuses erfolgt. Die Einlauföffnung und die Auslauföffnung weisen jeweils einen Einlaufstutzen und einen Auslaufstutzen auf, an die jeweils ein Rohr angeschlossen werden kann, um die Wasserzuführung zur Einlauföffnung bzw. die Abführung des Wassers von der Ablauföffnung sicherzustellen. Diese Konstruktion hat den Nachteil, dass beim Aufstellen einer zum Beispiel industriellen Waschmaschine Rohranschlüsse an zwei unterschiedlichen Seiten bereitgestellt bzw. auch bearbeitet werden müssen. Auch bei der Wartung sind diametral gegenüberliegende Anschlussstellen für den Einlauf und den Auslauf des Wassers zu berücksichtigen, was im Allgemeinen umständlich ist und in engen Räumen vielfach problematisch sein kann.

Die Aufgabe der vorliegenden Erfindung ist daher, eine Filtervorrichtung für den industriellen Einsatz der eingangs genannten Art derart weiterzuentwickeln, dass ein Aufstellen und Warten der Filtervorrichtungen gegenüber Filtervorrichtungen des Standes der Technik deutlich erleichtert wird.

Die Aufgabe wird erfindungsgemäß dadurch gelöst, dass sich die Filtereinrichtung mit einem ersten Trägerelement parallel zur ersten Gehäusewand und mit einem zweiten Trägerelement parallel zu einer zweiten Gehäusewand erstreckt und sich das zweite Trägerelement von dem ersten Trägerelement bis zur ersten Gehäusewand erstreckt, und dass der Strömungskanal unterhalb der Filtereinrichtung angeordnet ist und die Filtereinrichtung mit der zweiten Gehäusewand den Strömungskanal über den wenigstens einen Abschnitt bildet.

Durch die Ausbildung der Einlauföffnung und der Auslauföffnung in der gleichen ersten Gehäusewand der Filtervorrichtung kann die gesamte Verrohrung zwischen der Filtervorrichtung und einer Industriewaschmaschine von einer Seite der Spül- oder Waschmaschine aus erfolgen. Dadurch wird das Aufstellen und Warten der entsprechenden Spül- oder Waschmaschine auch in engen Räumlichkeiten deutlich erleichtert.

Ein weiterer Vorteil der vorliegenden Erfindung ist, dass die Auslauföffnung in einer Betriebsstellung des Filtergehäuses in einem Abstand unterhalb der Einlauföffnung angeordnet ist. Die Anordnung der Auslauföffnung unterhalb der Einlauföffnung führt zu einem Fließgefälle, das sich für den Strömungsweg günstig auswirkt.

Ein weiterer Vorteil der vorliegenden Erfindung ist, dass die Filtereinrichtung mit einer zweiten Gehäusewand über wenigstens einen Abschnitt des Strömungsweges einen Strömungskanal bildet. Durch diese Maßnahme wird es möglich, ohne zusätzliche Bauteile, die Filtereinrichtung und das Filtergehäuse als Strömungskanal zu nutzen.

Ein weiterer Vorteil der vorliegenden Erfindung ist, dass der Strömungskanal unterhalb der Filtereinrichtung angeordnet ist. Aufgrund der Anordnung der Einlauföffnung oberhalb der Auslauföffnung ist es günstig, wenn die zweite Gehäusewand der Boden des Filtergehäuses ist und die Filtereinrichtung mit Abstand zum Boden des Filtergehäuses angeordnet ist. Dadurch kann der Rückfluss des gereinigten Brauchwassers bzw. des Reinwassers unterhalb der Filtereinrichtung in Richtung Auslauföffnung erfolgen.

Ein weiterer Vorteil der vorliegenden Erfindung ist, dass die Filtereinrichtung ein Siebelement umfasst, das sich quer über den Strömungsweg des Brauchwassers erstreckt. Das Siebelement stellt somit ein Hindernis für die groben Rückstände im Brauchwasser dar, nicht aber für das Wasser an sich. Dadurch wird die Filterung des Brauchwassers in Abhängigkeit von der Siebweite ermöglicht. Das Siebelement steht in der Regel in einem Winkel von 45° oder 90° zum Wasserfluss. Der gesamte Filterschlamm muss vom Boden des Filterkastens "gekratzt" werden und bildet auf dem Boden, vor allen Dingen bei nicht regelmäßiger Reinigung, einen Sumpf. Dies kann insbesondere bei der Verwendung einer Sumpfpumpe zur Verstopfung der Pumpe führen. Die ausschließliche Sammlung von Rückständen auf dem Boden von Filterkästen erschwert auch deren Reinigung.

Da die Filtereinrichtung erhöht angebracht ist, weist diese einen Boden auf, der als Auffangschale ausgebildet sein kann und die Rückstände besser auffängt, damit diese sich erst gar nicht auf dem Boden ablagern und einen Sumpf bilden können. Hilfreich für eine leichte Säuberung ist dabei auch, dass die Filtereinrichtung an einem Griff herausnehmbar ist.

Das Siebelement ist in einem stumpfen Anströmwinkel zum Strömungsweg des Brauchwassers angeordnet. Der stumpfe Anströmwinkel führt dazu, dass bei dem anströmenden Aufprall einer flächigen Verteilung des Brauchwassers über einen größeren Bereich des Siebelements erfolgt, so dass das Wasser durch diesen größeren Bereich des Siebelements hindurchdringen kann und einen Weg findet, selbst dann, wenn auf der Sieboberfläche grobe Rückstände zurückgehalten werden.

Ein weiterer Vorteil der vorliegenden Erfindung ist, dass in dem Filtergehäuse zwischen der Filtereinrichtung und einem Eingang des Strömungskanals ein Umlenkbereich ausgebildet ist, in dem eine Fließrichtung des Reinwassers zum Strömungskanal umgelenkt wird. Dadurch wird das von dem Siebelement in den Umlenkbereich strömende Reinwasser nicht an der Rückseite des Filtergehäuses aus diesem abgeführt, sondern prallt an der Rückwand zurück, so dass sich die Strömungsrichtung um etwa 180° "umlenkt". Das zurückfließende Reinwasser wird dann durch den Strömungskanal unter der Filtereinrichtung hindurch zur Auslauföffnung geführt.

Weitere Vorteile der vorliegenden Erfindung ergeben sich aus den weiteren Merkmalen der Unteransprüche.

Eine Ausführungsform der vorliegenden Erfindung wird im Folgenden anhand der Zeichnung näher beschrieben. Es zeigen:
Fig. 1 eine schematische Schnittdarstellung im Längsschnitt durch ein Filtergehäuse einer Filtervorrichtung gemäß vorliegender Erfindung;
Fig. 2 eine schematische Schnittdarstellung im Querschnitt durch das Filtergehäuse aus Fig. 1;
Fig. 3 eine schematische Schnittdarstellung in einem horizontalen Schnitt durch das Filtergehäuse aus Fig. 1;
Fig. 4 eine schematische Schnittdarstellung im Längsschnitt eines Filtergehäuses des Standes der Technik; und
Fig. 5 eine Schnittdarstellung im Querschnitt des Filtergehäuses aus Fig. 4.

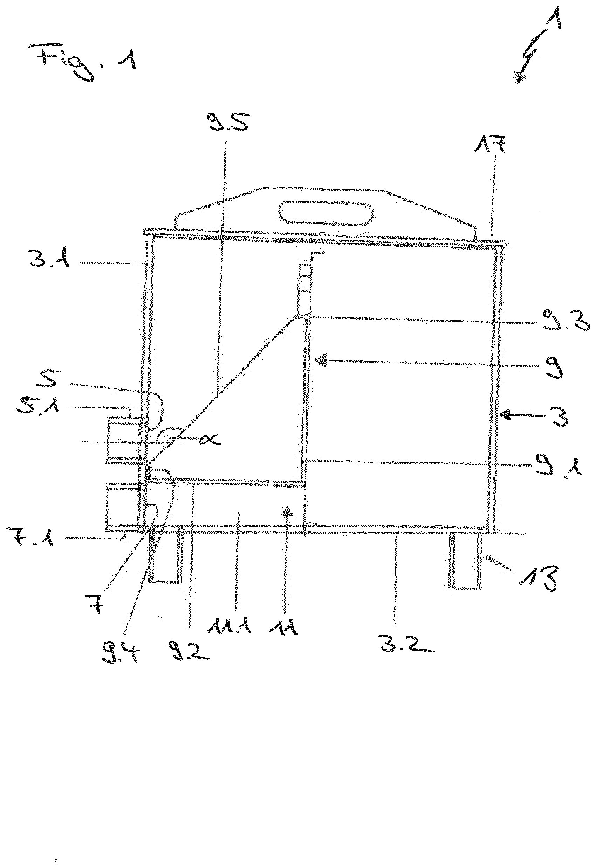

In Fig. 1 ist schematisch eine Filtervorrichtung 1 gemäß vorliegender Erfindung dargestellt. Die Filtervorrichtung 1 umfasst ein Filtergehäuse 3, das in der vorliegenden Ausführungsform als rechtwinkliger Kasten ausgebildet ist. In anderen Ausführungsformen kann das Filtergehäuse 3 auch andere Formen aufweisen.

Das Filtergehäuse 3 hat mehrere Gehäusewände, die das Filtergehäuse 3 allseitig umschließen. Für die vorliegende Erfindung von Bedeutung ist eine erste Gehäusewand 3.1 und eine zweite Gehäusewand 3.2. In der ersten Gehäusewand 3.1 ist eine Einlauföffnung 5 ausgebildet, an der ein Einlaufstutzen 5.1 außen angebracht ist. In einem Abstand zu der Einlauföffnung 5 ist in der ersten Gehäusewand 3.1 eine Auslauföffnung 7 ausgebildet. Auch die Auslauföffnung 7 weist einen Auslaufstutzen 7.1 an der Außenseite der ersten Gehäusewand 3.1 auf. Auch der Einlaufstutzen 5.1 und der Auslaufstutzen 7.1 liegen in einem Abstand zueinander.

In dem Filtergehäuse 3 ist eine Filtereinrichtung 9 angeordnet. Die Filtereinrichtung 9 erstreckt sich mit einem ersten Trägerelement 9.1 parallel zur ersten Gehäusewand 3.1 und mit einem zweiten Trägerelement 9.2 parallel zu einer zweiten Gehäusewand 3.2. Das zweite Trägerelement 9.2 erstreckt sich von dem ersten Trägerelement 9.1 bis zur ersten Gehäusewand 3.1. Von einem freien Ende des ersten Trägerelements 9.1, das heißt von einem der zweiten Gehäusewand 3.2 distalen Ende 9.3 des ersten Trägerelements 9.1, und einem an der ersten Gehäusewand 3.1 angrenzenden Ende 9.4 des zweiten Trägerelements 9.2 erstreckt sich ein Siebelement 9.5. Das Siebelement 9.5 erstreckt sich derart, dass die Einlauföffnung 5 in einer Betriebsstellung des Filtergehäuses 3 vollständig oberhalb des Siebelements 9.5 liegt.

In der in Fig. 1 dargestellten Ausführungsform trifft das Brauchwasser aus der Einlauföffnung 5 in einem stumpfen Anströmwinkel α auf das Siebelement 9.5. Grobe Rückstände im Brauchwasser werden von dem Siebelement 9.5 zurückgehalten, während das Wasser an sich durch das Siebelement 9.5 hindurchströmen kann. Ein Strömungsweg zwischen dem Siebelement 9.5 und der Auslauföffnung 7 wird wenigstens in einem letzten Abschnitt 11 vor der Auslauföffnung 7 durch einen Strömungskanal 11.1 geführt. Der Strömungskanal 11.1 mündet von innen in die Auslauföffnung 7.

Durch die unter der zweiten Gehäusewand 3.2 (dem Boden) angebrachten Kunststoff-Rohrstutzen 13 lässt sich durch Absägen dieser oder das Aufstecken von längeren Kunststoffrohren die UNI-Filterbox stufenlos höhenverstellen.

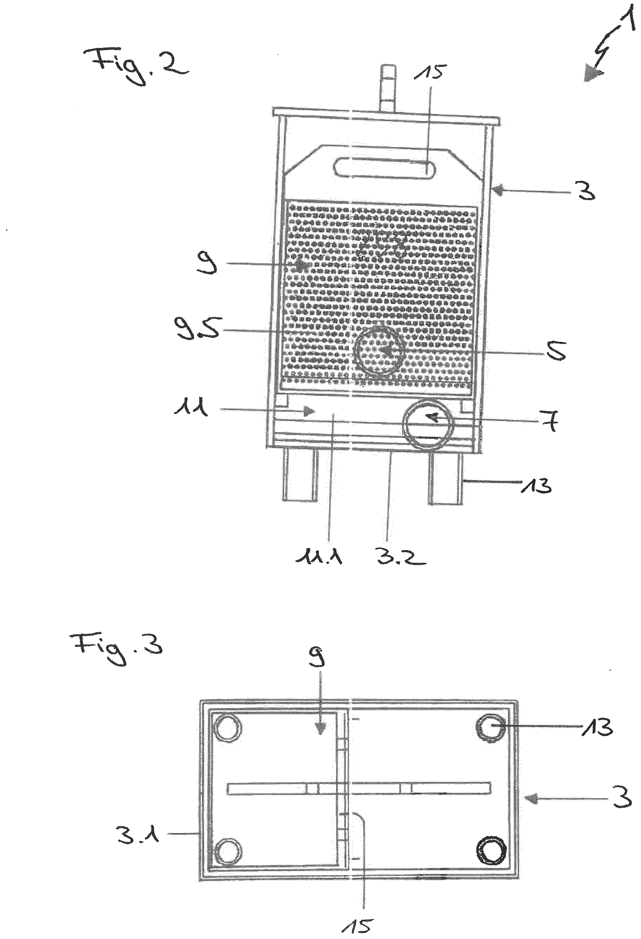

In Fig. 2 ist schematisch im Querschnitt durch das Filtergehäuse 3 dargestellt, wie sich das Siebelement 9.5 in dem Filtergehäuse 3 erstreckt. Die Filtereinrichtung 9 weist einen Griff 15 auf, mit dem die Filtereinrichtung 9 aus dem Filtergehäuse 3 entnommen werden kann. Ebenso weist das Filtergehäuse 3 einen Griff auf (Fig. 1), mit dem ein Deckel 17 des Filtergehäuses 3 abgehoben werden kann. In Fig. 2 ist zu sehen, dass die Auslauföffnung 7 nicht nur unterhalb der Einlauföffnung 5 ausgebildet ist, sondern zusätzlich auch horizontal versetzt zur Einlauföffnung 5.

In Fig. 3 ist schematisch eine Draufsicht im horizontalen Schnitt des Filtergehäuses 3 dargestellt. Die Filtereinrichtung 9 ist in ihrer Geometrie an die Geometrie an die Innenabmessungen des Filtergehäuses 3 angepasst, derart, dass die Filtereinrichtung 9 in das Filtergehäuse 3 lösbar, aber fest eingesetzt werden kann.

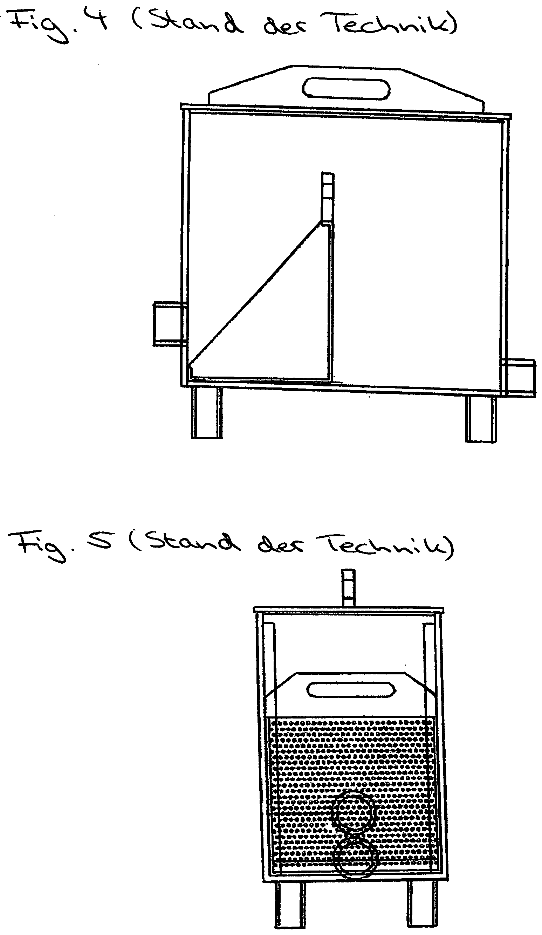

In Fig. 4 und Fig. 5 ist ein Filtergehäuse 3 des Standes der Technik dargestellt. Es ist zu sehen, dass einerseits die Einlauföffnung 5 und die Auslauföffnung 5 einander diametral gegenüberliegen, also in zwei einander gegenüberliegenden Gehäusewänden ausgebildet sind, und andererseits in der gleichen vertikalen Ebene, also nicht seitlich zueinander versetzt, angeordnet sind.

### Bezugszeichenliste

- 1: Filtervorrichtung
- 3: Filtergehäuse
- 3.1: erste Gehäusewand
- 3.2: zweite Gehäusewand
- 5: Einlauföffnung
- 7: Auslauföffnung
- 9: Filtereinrichtung
- 9.1: erstes Trägerelement
- 9.2: zweites Trägerelement
- 9.3: distales Ende
- 9.4: angrenzendes Ende
- 9.5: Siebelement
- 11: letzter Abschnitt
- 11.1: Strömungsweg
- 13: Rohrstutzen
- 15: Griff
- 17: Deckel

## Patentansprüche

1. Filtervorrichtung zum Anschluss an eine Wasserablassseite von industriellen Waschmaschinen, Spülmaschinen oder anderen Geräten mit Wasserabfluss in die öffentliche Kanalisation, mit einem Filtergehäuse (3), mit einer Einlauföffnung (5) für Brauchwasser, mit einer Auslauföffnung (7) für Reinwasser, wobei die Einlauföffnung (5) in einer ersten Gehäusewand (3.1) ausgebildet ist, und mit einer Filtereinrichtung (9) zum Filtern des Brauchwassers, die stromabwärts der Einlauföffnung (5) im Strömungsweg des Brauchwassers angeordnet ist, wobei die Filtereinrichtung (9) ein Siebelement (9.5) umfasst, das sich quer über den Strömungsweg des Brauchwassers erstreckt und
wobei die Auslauföffnung (7) in der ersten Gehäusewand (3.1) ausgebildet ist und ein Strömungsweg zwischen dem Siebelement (9.5) und der Auslauföffnung (7) wenigstens in einem letzten Abschnitt (11) vor der Auslauföffnung (7) durch einen Strömungskanal (11.1) führt,
**dadurch gekennzeichnet,**
**dass** sich die Filtereinrichtung (9) mit einem ersten Trägerelement (9.1) parallel zur ersten Gehäusewand (3.1) und mit einem zweiten Trägerelement (9.2) parallel zu einer zweiten Gehäusewand (3.2) erstreckt und sich das zweite Trägerelement (9.2) von dem ersten Trägerelement (9.1) bis zur ersten Gehäusewand (3.1) erstreckt, und dass der Strömungskanal (11.1) unterhalb der Filtereinrichtung (9) angeordnet ist und die Filtereinrichtung (9) mit der zweiten Gehäusewand (3.2) den Strömungskanal (11.1) über den wenigstens einen Abschnitt (11) bildet.

2. Filtervorrichtung nach Anspruch 1,
**dadurch gekennzeichnet,**
**dass** die Auslauföffnung (7) in einer Betriebsstellung des Filtergehäuses (3) in einem Abstand unterhalb der Einlauföffnung (5) angeordnet ist.

3. Filtervorrichtung nach Anspruch 1 oder 2,
**dadurch gekennzeichnet,**
**dass** der Strömungskanal (11.1) stromabwärts in der Auslauföffnung (7) mündet.

4. Filtervorrichtung nach einem der Ansprüche 1 bis 3, **dadurch gekennzeichnet,**
**dass** sich das Siebelement (9.5) in der Filtereinrichtung (9) schräg angeordnet ist.

5. Filtervorrichtung nach Anspruch 4,
**dadurch gekennzeichnet,**
**dass** das Siebelement (9.5) in einem im Wesentlichen stumpfen Anströmwinkel (α) des Brauchwassers angeordnet ist.

6. Filtervorrichtung nach einem der vorstehenden Ansprüche,
**dadurch gekennzeichnet,**
**dass** die Einlauföffnung (5) an der ersten Gehäusewand (3.1) einen Einlaufstutzen (5.1) aufweist und die Auslauföffnung (7) an der ersten Gehäusewand (3.1) einen Auslaufstutzen (7.1) aufweist.

7. Filtervorrichtung nach Anspruch 6,
**dadurch gekennzeichnet,**
**dass** der Einlaufstutzen (5.1) und der Auslaufstutzen (7.1) im Wesentlichen parallel ausgerichtet sind.

## Claims

1. A filter device intended to be connected to a water-outlet side of industrial washing machines, dishwashers or other appliances with water drainage into the public sewer system, with a filter housing (3) with an inlet opening (5) for service water and an outlet opening (7) for pure water, wherein the inlet opening (5) is formed in a first housing wall (3.1), and with a filtering means (9) for filtering the service water that is arranged downstream of the inlet opening (5) in the flow path of the service water, wherein the filtering means (9) includes a sieve element (9.5) which extends transversely across the flow path of the service water and wherein the outlet opening (7) is formed in the first housing wall (3.1) and a flow path between the sieve element (9.5) and the outlet opening (7) runs through a flow channel (11.1) at least in a final section (11) before the outlet opening (7), **characterised in that**
the filtering means (9) extends with a first support element (9.1) parallel to the first housing wall (3.1) and with a second support element (9.2) parallel to a second housing wall (3.2), and the second support element (9.2) extends from the first support element (9.1) to the first housing wall (3.1), and the flow channel (11.1) is arranged underneath the filtering means (9) and the filtering means (9) and the second housing wall (3.2) together form the flow channel (11.1) over the at least one section (11).

2. A filter device according to claim 1,
**characterised in that**
the outlet opening (7) is arranged at a distance below the inlet opening (5) in an operating position of the filter housing (3).

3. A filter device according to claim 1 or 2,
**characterised in that**
the flow channel (11.1) discharges downstream into the outlet opening (7).

4. A filter device according to one of claims 1 to 3,
**characterised in that**
the sieve element (9.5) is arranged at an angle in the filtering means (9).

5. A filter device according to claim 4,
**characterised in that**
the sieve element (9.5) is arranged at an essentially obtuse angle (α) in relation to the direction of flow of the service water.

6. A filter device according to one of the preceding claims,
**characterised in that**
the inlet opening (5) on the first housing wall (3.1) has an inlet pipe connector (5.1) and the outlet opening (7) on the first housing wall (3.1) has an outlet pipe connector (7.1).

7. A filter device according to claim 6,
**characterised in that**
the inlet pipe connector (5.1) and the outlet pipe connector (7.1) are oriented essentially parallel to each other.

## Revendications

1. Dispositif de filtrage pour raccordement à un côté d'écoulement d'eau de machines à laver, de machines à rincer ou d'autres appareils industriels avec un écoulement d'eau dans les canalisations publiques, avec une enceinte de filtrage (3), avec une ouverture d'arrivée (5) pour l'eau industrielle, avec une ouverture d'écoulement (7) pour l'eau pure, sachant que l'ouverture d'arrivée (5) est constituée dans une première paroi d'enceinte (3.1), et avec un système de filtrage (9) pour filtrer l'eau industrielle, qui est disposé en aval de l'ouverture d'arrivée (5) dans le trajet d'écoulement de l'eau industrielle, sachant que le système de filtrage (9) comprend un élément de tamisage (9.5), qui s'étend transversalement sur le trajet d'écoulement de l'eau industrielle, et
sachant que l'ouverture d'écoulement (7) est constituée dans la première paroi d'enceinte (3.1) et un trajet d'écoulement entre l'élément de tamisage (9.5) et l'ouverture d'écoulement (7) conduit au moins dans une dernière section (11) avant l'ouverture d'écoulement (7) par un conduit d'écoulement (11.1),
**caractérisé en ce que**
le système de filtrage (9) s'étend avec un premier élément de support (9.1) parallèlement à la première paroi d'enceinte (3.1) et avec un deuxième élément de support (9.2) parallèlement à une deuxième paroi d'enceinte (3.2) et le deuxième élément de support (9.2) s'étend du premier élément de support (9.1) jusqu'à la première paroi d'enceinte (3.1), et **en ce que** le conduit d'écoulement (11.1) est disposé en dessous du système de filtrage (9) et le système de filtrage (9) forme avec la deuxième paroi d'enceinte (3.2) le conduit d'écoulement (11.1) au-dessus d'au moins une section (11).

2. Dispositif de filtrage selon la revendication 1, **caractérisé en ce que**
l'ouverture d'écoulement (7) est disposée dans une position de fonctionnement de l'enceinte de filtrage (3) à une distance en dessous de l'ouverture d'arrivée (5).

3. Dispositif de filtrage selon la revendication 1 ou 2, **caractérisé en ce que**
le conduit d'écoulement (11.1) débouche en aval dans l'ouverture d'écoulement (7).

4. Dispositif de filtrage selon l'une quelconque des revendications de 1 à 3,
**caractérisé en ce que**
l'élément de tamisage (9.5) est disposé de façon inclinée dans le système de filtrage (9).

5. Dispositif de filtrage selon la revendication 4, **caractérisé en ce que**
l'élément de tamisage (9.5) est disposé pour l'essentiel dans un angle d'incidence obtus (α) de l'eau industrielle.

6. Dispositif de filtrage selon l'une quelconque des revendications précédentes,
**caractérisé en ce que**
l'ouverture d'arrivée (5) comporte une tubulure d'arrivée (5.1) sur la première paroi d'enceinte (3.1) et l'ouverture d'écoulement (7) comporte une tubulure d'écoulement (7.1) sur la première paroi d'enceinte (3.1).

7. Dispositif de filtrage selon la revendication 6, **caractérisé en ce que**
la tubulure d'arrivée (5.1) et la tubulure d'écoulement (7.1) sont orientées pour l'essentiel parallèlement .
